# EUROPÄISCHE PATENTSCHRIFT

(11) **EP 3 036 423 B1**
(45) Veröffentlichungstag und Bekanntmachung des Hinweises auf die Patenterteilung: **10.10.2018**
(21) Anmeldenummer: 14747639.4
(22) Anmeldetag: 04.08.2014
(51) Int. Cl.: F02M 31/125, F02M 37/22, H05B 3/06, B01D 35/18

(54) **FLUIDSYSTEM MIT WENIGSTENS EINER HEIZVORRICHTUNG FÜR FLUID UND HEIZVORRICHTUNG**
FLUID SYSTEM WITH AT LEAST ONE HEATING DEVICE FOR FLUID, AND HEATING DEVICE
SYSTÈME FLUIDIQUE POURVU D'AU MOINS UN DISPOSITIF DE CHAUFFAGE D'UN FLUIDE ET DISPOSITIF DE CHAUFFAGE

(30) Priorität: 20.08.2013 DE 102013013713
(43) Veröffentlichungstag der Anmeldung: 29.06.2016
(73) Patentinhaber: MANN+HUMMEL GmbH, 71636 Ludwigsburg (DE)
(72) Erfinder: FRIEDERICH, Thomas, 71739 Oberriesingen (DE); BEYERLIN, Holger, 71292 Friolzheim (DE); WEIDINGER, Sven, 71384 Weinstadt (DE); GOEDECKE, Marco, 71665 Vaihingen (DE)
(86) Internationale Anmeldenummer: PCT/EP2014/066731
(87) Internationale Veröffentlichungsnummer: WO 2015/024766

(56) Entgegenhaltungen:
- EP-A1- 0 367 631
- EP-A2- 0 581 176
- US-A- 4 479 477
- US-A1- 2012 183 282

## Beschreibung

### Technisches Gebiet

Die Erfindung betrifft ein Fluidsystem, insbesondere Filtersystem, für Fluid, insbesondere Kraftstoff, Öl, Wasser oder Harnstofflösung, insbesondere einer Brennkraftmaschine, insbesondere eines Kraftfahrzeugs, mit wenigstens einer Heizvorrichtung für Fluid, mit wenigstens einer Heizkammer, die wenigstens einen Einlass und wenigstens einen Auslass für das Fluid aufweist.

Ferner betrifft die Erfindung eine Heizvorrichtung für Fluid, insbesondere Kraftstoff, Öl, Wasser oder Harnstofflösung, insbesondere einer Brennkraftmaschine, insbesondere eines Kraftfahrzeugs, insbesondere eines erfindungsgemäßen Fluidsystems.

### Stand der Technik

Ein vom Markt her bekanntes Filtersystem für Dieselkraftstoff einer Brennkraftmaschine eines Kraftfahrzeugs weist eine Kraftstoffheizung auf. Mit der Kraftstoffheizung kann der Kraftstoff in einer Heizkammer des Filtersystems erwärmt werden, bevor er zu einer Rohseite eines Filterelements des Filtersystems gelangt. Auf diese Weise kann insbesondere bei geringen Umgebungstemperaturen die Fließfähigkeit des Kraftstoffs verbessert werden und ein Druckunterschied zwischen der Rohseite und einer Reinseite des Filterelements verringert werden.

So ist aus der US 4 479 477 ein Kraftstofffilter mit einer Heizvorrichtung bekannt, bei dem die zur Beheizung eingesetzte Wärme durch einen elektrischen Heizer mit positivem Temperaturkoeffizient erzeugt wird. Die PTCs sind als kreisförmige Scheiben ausgeführt, die auf eine Halteplatte thermisch und Strom leitend befestigt sind und von der Oberseite her mit Strom versorgt werden. Hierzu ist eine obere Platte vorgesehen, die zu den PTCs weisend Federelemente hat, die sich auf diesen abstützen. Sowohl obere Platte als auch untere Platte sind kreisringförmig mit einer zentralen Öffnung für einen Stutzen ausgeführt, weisen gleiche Innen- und Außendurchmesser auf und sind planparallel montiert, wobei der Abstand zwischen oberer und unterer Platte von einem Thermostaten definiert wird und diese durch Federelementen gehalten werden.

Schließlich betrifft die EP 0 367 631 A1 einen Kraftstoffheizer, der in einem Filterkopf angeordnet ist und mehrere umfänglich in individuellen Kavitäten angeordnete Heizscheiben aufweist, die an der Oberseite über zumindest eine Kontaktfeder elektrisch kontaktiert sind und unterseitig von einer weiteren Blattfeder gehalten werden.

Der Erfindung liegt die Aufgabe zugrunde, ein Fluidsystem und eine Heizvorrichtung für Fluid der eingangs genannten Art zu gestalten, bei dem/der eine Erwärmung des Fluids mit der Heizvorrichtung verbessert werden kann.

### Offenbarung der Erfindung

Diese Aufgabe wird erfindungsgemäß bezüglich des Fluidsystems durch die Merkmale des Anspruchs 1 gelöst. Das Fluidsystem sieht vor, dass in der wenigstens einen Heizkammer wenigstens ein elektrisch betriebenes Heizelement zwischen zwei Haltekörpern so angeordnet ist, dass es mit wenigstens einem Kontaktabschnitt wenigstens einem der Haltekörper in einem elektrischen und einem thermischen Kontakt steht, wobei wenigstens ein innerer Volumenbereich zwischen den zwei Haltekörpern und wenigstens ein äußerer Volumenbereich an einer dem wenigstens einen inneren Volumenbereich abgewandten Außenseite wenigstens einem der Haltekörper für das Fluid durchströmbar sind, wobei in wenigstens einem vergrößerten Abschnitt des wenigstens einen inneren Volumenbereichs ein Abstand zwischen den zwei Haltekörpern größer ist als ein Abstand zwischen den Haltekörpern in einem Bereich des wenigstens einen Kontaktabschnitts wenigstens auf dessen dem wenigstens einen vergrößerten Abschnitt zugewandten Umfangsseite.

Erfindungsgemäß ist das wenigstens eine Heizelement zwischen den beiden Haltekörpern angeordnet. Dabei hat es mit dem Kontaktabschnitt wenigstens einem der Haltekörper elektrischen und thermischen Kontakt. Das wenigstens eine Heizelement, insbesondere seine Ausdehnung axial zu einer gedachten Achse des Heizelements, kann vorteilhafterweise den Abstand zwischen den beiden Haltekörpern in dem wenigstens einen Kontaktabschnitt vorgeben. Ein Abstand zwischen den Haltekörpern ist außerhalb des wenigstens einen Kontaktabschnitts, also neben dem wenigstens einen Heizelement, wenigstens in dem einen vergrößerten Abschnitt vergrößert. So kann das wenigstens eine Heizelement auch im Verhältnis zu seiner seitlichen, insbesondere radialen, Ausdehnung dünn sein. Der Strömungsquerschnitt des wenigstens einen inneren Volumenbereichs wird durch den geringeren Abstand im Bereich des wenigstens einen Kontaktabschnitts nicht beschränkt.

Vorteilhafterweise kann der wenigstens eine vergrößerte Abschnitt an die zugewandte Umfangsseite des wenigstens einen Kontaktabschnitts angrenzen.

Vorteilhafterweise kann in wenigstens einem vergrößerten Abschnitt der Abstand zwischen den zwei Haltekörpern größer sein wenigstens als ein kleinster Abstand zwischen den Haltekörpern im Bereich des wenigstens einen Kontaktabschnitts.

Vorteilhafterweise kann ein kleinster Abstand zwischen den beiden Haltekörpern in dem wenigstens einen inneren Volumenbereich größer sein als der kleinste Abstand zwischen den Haltekörpern im Bereich des wenigstens einen Kontaktabschnitts.

Vorteilhafterweise kann der Abstand zwischen den zwei Haltekörpern wenigstens in dem einen vergrößerten Abschnitt des wenigstens einen inneren Volumenbereichs größer sein als ein größter Abstand zwischen den Haltekörpern im Bereich des wenigstens einen Kontaktabschnitts.

Vorteilhafterweise kann ein kleinster Abstand zwischen den zwei Haltekörpern in dem wenigstens einen inneren Volumenbereich größer sein als ein größter Abstand zwischen den Haltekörpern im Bereich des wenigstens einen Kontaktabschnitts.

Vorteilhafterweise kann ein Verlauf der Strömungsquerschnitte in dem wenigstens einen inneren Volumenbereich vergleichbar sein mit einem Verlauf der Strömungsquerschnitte in dem wenigstens einen äußeren Volumenbereich. Auf diese Weise können zwischen den beiden Haltekörpern ähnliche Fluidströmungen realisiert werden, wie in dem wenigstens einen äußeren Volumenbereich. So kann eine gleichmäßige Fluidumströmung um wenigstens einen der Haltekörper und das wenigstens eine Heizelement erreicht werden. Es kann eine gleichmäßige Verteilung der Fluidströmung auf mindestens zwei, bevorzugt drei, Ebenen, insbesondere den wenigstens einen inneren Volumenbereich und den wenigstens einen äußeren Volumenbereich, erfolgen. Die gleichmäßige Verteilung der Fluidströmung auf zwei oder drei Strömungsebenen kann zu einer besseren Wärmeabfuhr von dem wenigstens einen Heizelement und zu einer besseren Kühlung des wenigstens einen Heizelements führen. So kann der Betrieb der Heizvorrichtung verbessert werden. Bei gleichbleibender Baugröße kann eine größere Heizleistung erreicht werden. Alternativ kann die Heizleistung mit einer kleineren Baugröße erreicht werden.

Vorteilhafterweise können die Strömungsquerschnitte zumindest in vergleichbaren Schnittebenen durch die Volumenbereiche etwa gleich groß sein. Die vergleichbaren Schnittebenen können dabei vorteilhafterweise senkrecht zu einer mittleren Strömungsrichtung des Fluids durch die Volumenbereiche verlaufen. Vorteilhafterweise kann wenigstens ein minimaler Strömungsquerschnitt in dem wenigstens einen vergrößerten Abschnitt des wenigstens einen inneren Volumenbereichs etwa so groß sein wie ein minimaler Strömungsquerschnitt in dem wenigstens einen äußeren Volumenbereich.

Vorteilhafterweise kann eine Kontaktfläche des wenigstens einen Haltekörpers in dem wenigstens einen Kontaktabschnitt entsprechend der angrenzenden oder anliegenden Oberfläche des Heizelements ausgestaltet sein.

Vorteilhafterweise kann das wenigstens eine Heizelement auf gegenüberliegenden Stirnseiten jeweils eine Kontaktfläche aufweisen. Die Kontaktflächen können jeweils an einem entsprechenden Kontaktabschnitt des entsprechenden Haltekörpers anliegen. Dabei kann vorteilhafterweise ein thermischer und/oder elektrischer Kontakt realisiert werden.

Vorteilhafterweise können die Kontaktflächen des wenigstens einen Heizelements parallel sein. Vorteilhafterweise kann wenigstens eine der Kontaktflächen eben sein. Entsprechend kann die zugewandte Oberfläche des wenigstens einen Kontaktabschnitts eben sein. Vorteilhafterweise können die Oberflächen der Kontaktabschnitte der Haltekörper und die Kontaktflächen des wenigstens einen Heizelements planparallel ausgeführt sein. So kann die thermische und/oder elektrische Kontaktierung verbessert werden.

Vorteilhafterweise kann das wenigstens eine Heizelement die Form eines flachen, insbesondere runden, ovalen oder eckigen Zylinders, eines Plättchens oder einer Platte, aufweisen. Das wenigstens eine Heizelement kann mit seinen großen Stirnseiten jeweils an einem der Haltekörper anliegen. Eine Dicke des wenigstens einen Heizelements, insbesondere axial zu der Achse des Heizelements, kann im Verhältnis zu seiner seitlichen, insbesondere radialen, Ausdehnung klein sein. Die Dicke des wenigstens einen Heizelements kann den Abstand zwischen den Kontaktkörpern im Bereich des wenigstens einen Kontaktabschnitt vor. Mit verhältnismäßig dünnen Heizelementen kann eine Wärmeableitung zwischen dem wenigstens einen Heizelement und dem Fluid verbessert werden. Dadurch, dass der Abstand zwischen den zwei Haltekörpern außerhalb des Kontaktabschnitts größer ist als im Bereich des wenigstens einen Kontaktabschnitts, kann das Risiko eines Kontakts zwischen den beiden Haltekörpern im inneren Volumenbereich verringert werden. Im Fall, dass beide Haltekörper elektrisch leitfähig sind, kann so das Risiko eines elektrischen Kurzschlusses verringert werden.

Vorteilhafterweise kann das Fluid Kraftstoff, Öl, Wasser oder Harnstofflösung insbesondere einer Brennkraftmaschine und/oder eines Kraftfahrzeugs sein. Die Erfindung ist jedoch nicht beschränkt auf eine Brennkraftmaschine eines Kraftfahrzeugs. Vielmehr kann sie auch bei andersartigen Brennkraftmaschinen, insbesondere Industriemotoren, eingesetzt werden. Sie kann auch bei Kraftfahrzeugen außerhalb der Brennkraftmaschine verwendet werden.

Vorteilhafterweise kann das Fluidsystem ein Filtersystem für Fluid sein oder aufweisen, mit dem das Fluid gereinigt werden kann. Vorteilhafterweise kann das Fluidsystem wenigstens einen Filter und/oder ein Filterelement für das Fluid aufweisen.

Vorteilhafterweise kann die Heizvorrichtung bezüglich der Fluidströmung vor dem Filter angeordnet sein. Auf diese Weise kann das Fluid mit der Heizvorrichtung erwärmt werden, bevor es zu dem Filter gelangt. So kann die Fließfähigkeit des Fluids vor Erreichen des Filters verbessert werden. Eine Druckdifferenz des Fluids zwischen der Rohseite und der Reinseite des Filters kann auf diese Weise verkleinert werden. Bei der Verwendung der Erfindung im Zusammenhang mit einem Kraftstoffsystem einer Brennkraftmaschine kann so das Kaltstartverhalten insbesondere bei geringen Umgebungstemperaturen verbessert werden.

Vorteilhafterweise kann der Filter ein Hohlfilterelement, insbesondere Rundfilterelement, sein oder aufweisen. Das Hohlfilterelement kann vorteilhafterweise ein umfangsmäßig geschlossenes Filtermedium aufweisen. Das Filtermedium kann vorteilhafterweise zickzackförmig gefaltet sein. Das Hohlfilterelement kann vorteilhafterweise von radial außen nach radial innen oder umgekehrt mit dem Fluid durchströmt werden.

Bei einer vorteilhaften Ausführungsform kann das wenigstens eine Heizelement mit beiden Haltekörpern zumindest in einem elektrischen Kontakt stehen.

Auf diese Weise kann das wenigstens eine Heizelement über die Haltekörper jeweils mit einem Pol einer elektrischen Spannungsquelle verbunden werden. Durch den erfindungsgemäß vergrößerten Abstand der beiden Haltekörper außerhalb der Kontaktabschnitte kann ein Risiko eines elektrischen Kurzschlusses zwischen den Haltekörpern verringert werden.

Vorteilhafterweise kann das wenigstens eine Heizelement mit beiden Haltekörpern in einem thermischen Kontakt stehen. Durch den thermischen Kontakt mit beiden Haltekörpern kann insgesamt die zum Wärmeaustausch aktive Oberfläche der Heizvorrichtung vergrößert werden, an der das Fluid entlang strömen und erwärmt werden kann.

Bei einer weiteren vorteilhaften Ausführungsform kann an den dem wenigstens einen inneren Volumenbereich abgewandten Außenseiten von beiden Haltekörpern wenigstens ein entsprechender äußerer Volumenbereich angeordnet sein. Auf diese Weise kann an beiden Außenseiten jeweils wenigstens ein vom Fluid durchströmbarer äußerer Volumenbereich realisiert werden. So kann das Fluid das wenigstens eine Heizelement und die Haltekörper auf drei Strömungsebenen umströmen. Eine Wärmeübertragung zwischen wenigstens dem einen Heizelement und dem Fluid kann dadurch weiter verbessert werden.

Bei einer weiteren vorteilhaften Ausführungsform kann wenigstens einer der Haltekörper Metall, insbesondere Blech, sein oder aufweisen. Mit Metall kann eine gute elektrische Leitfähigkeit realisiert werden. Ferner kann mit Metall eine gute Wärmeleitfähigkeit realisiert werden. Metall kann einfach bearbeitet, insbesondere gebogen oder geschnitten, werden. Haltekörper aus Blech können einfach realisiert werden. Sie können einfach gebogen werden. Blech kann mit einer im Vergleich zu seiner seitlichen Ausdehnung geringen Dicke realisiert werden. Auf diese Weise kann ein erforderlicher Bauraum optimiert werden.

Bei einer weiteren vorteilhaften Ausführungsform kann wenigstens einer der Haltekörper wenigstens einen ringartigen Teil, insbesondere wenigstens einen Sektor einer Kreisringscheibe, aufweisen. Ein ringartiger Haltekörper kann einfach und platzsparend in einer ringförmigen Heizkammer angeordnet werden. Vorteilhafterweise kann wenigstens einer der Haltekörper ein Ring oder einen Sektor eines Rings sein. Durch eine zentrale Öffnung des Rings kann vorteilhafterweise ein Dom, insbesondere Zentrierdom, eines Gehäuses insbesondere der Heizkammer hindurchführen.

Vorteilhafterweise kann der ringartige Teil an einer Umfangsseite offen sein. Vorteilhafterweise kann der ringartige Teil ein Sektor einer Ringscheibe, insbesondere Kreisringscheibe, sein.

Der ringartige Teil kann vorteilhafterweise eine gedachte Achse aufweisen. In seinem Profil kann der ringartige Teil, insbesondere die Kreisringscheibe oder der Sektor der Kreisringscheibe, bezüglich der Achse von radial innen nach radial außen betrachtet einen radial inneren Bereich, einen mittleren Bereich und einen radial äußeren Bereich aufweisen. Der wenigstens eine Kontaktabschnitt kann vorteilhafterweise in dem mittleren Bereich angeordnet sein. Der radial innere Bereich und der radial äußere Bereich des ringartigen Teils können jeweilige Abschnitte des wenigstens einen inneren Volumenbereichs auf ihrer Seite wenigstens mit begrenzen. Auf diese Weise kann radial innerhalb und radial außerhalb des wenigstens einen Kontaktbereichs jeweils ein Abschnitt des wenigstens einen inneren Volumenbereichs realisiert werden. Auf diese Weise kann das wenigstens eine Heizelement umfangsmäßig besser und großflächiger von dem Fluid umströmt werden.

An oder in dem mittleren Bereich des ringartigen Teils kann vorteilhafterweise wenigstens ein Mittel, insbesondere wenigstens eine Öffnung oder Positionieröffnung und/oder wenigstens eine Erhebung, vorgesehen sein zur Befestigung und/oder Positionierung des wenigstens einen Haltekörpers relativ zu dem wenigstens einen Heizelement und/oder relativ zur Heizkammer.

Bei einer weiteren vorteilhaften Ausführungsform kann wenigstens einer der Haltekörper wenigstens im Bereich eines Übergangs zwischen dem wenigstens einen Kontaktabschnitt und dem wenigstens einen inneren Volumenbereich wenigstens eine Biegung oder Stufe aufweisen. Auf diese Weise können beiderseits der Biegung oder Stufe unterschiedliche Abstände zwischen den Haltekörpern realisiert werden.

Vorteilhafterweise kann sich der Abstand zwischen den Haltekörpern in dem wenigstens einen inneren Volumenbereich mit zunehmender Entfernung von dem wenigstens einen Kontaktabschnitt insbesondere gleichmäßig vergrößern. Alternativ kann der Abstand zwischen den beiden Haltekörpern in dem wenigstens einen inneren Volumenbereich konstant sein. Vorteilhafterweise kann hierzu die Biegung oder Stufe im Profil etwa S-förmig oder Z-förmig sein. Falls mehrere innere Volumenbereiche vorgesehen sind, können die dortigen Abstände unterschiedlich oder gleich sein oder unterschiedliche oder gleiche Verläufe haben.

Vorteilhafterweise können beide Haltekörper jeweils wenigstens eine Biegung oder Stufe aufweisen.

Vorteilhafterweise können die Haltekörper bezüglich einer Mittelebene zwischen den Haltekörpern symmetrisch, insbesondere gebogen oder gestuft, sein. Auf diese Weise kann eine Gleichmäßigkeit der Durchströmung weiter verbessert werden.

Bei einer weiteren vorteilhaften Ausführungsform kann das wenigstens eine Heizelement einen temperaturabhängigen elektrischen Widerstand, insbesondere mit einem positiven Temperaturkoeffizienten, aufweisen. Auf diese Weise kann ein Selbstregeleffekt für das wenigstens eine Heizelement erreicht werden. Der Selbstregeleffekt kann genutzt werden, um eine Überhitzung des Heizsystems zu vermeiden, falls die Heizung nicht mit Fluid durchströmt wird. Falls die Heizung nicht mit Fluid durchströmt wird, kann die Temperatur des wenigstens einen Heizelements stark ansteigen. Entsprechend kann sich der elektrische Widerstand des wenigstens einen Heizelements stark erhöhen. Durch den Selbstregeleffekt kann die Heizleistung entsprechend stark reduziert und eine Überhitzung des Heizsystems verhindert werden.

Vorteilhafterweise kann das wenigstens eine Heizelement ein sogenanntes PTC-Element sein oder aufweisen. Ein PTC-Element hat einen temperaturabhängigen elektrischen Widerstand mit einem positiven Temperaturkoeffizienten (PTC).

Bei der Verwendung eines Heizelements mit einem temperaturabhängigen elektrischen Widerstand, insbesondere einem PTC-Element, kann in Verbindung mit der gleichmäßigen Verteilung der Strömung auf unterschiedliche Strömungsebenen ein Arbeitspunkt des Heizelements zu geringeren Temperaturen verschoben werden. Der Arbeitspunkt des wenigstens einen Heizelements kann zu geringeren elektrischen Widerstandswerten verschoben werden. Eine Leistungsabgabe des wenigstens einen Heizelements bei gleichbleibendem Bauraum oder gleichbleibender Baugröße des wenigstens einen Heizelements kann so erhöht werden.

Bei einer weiteren vorteilhaften Ausführungsform können die wenigstens zwei Haltekörper mit dem dazwischen liegenden wenigstens einen Heizelement mit einer insbesondere elastischen Halteeinrichtung gehalten sein. Mit der Halteeinrichtung können die Haltekörper und das wenigstens eine Heizelement zusammengehalten werden. Mit der Halteeinrichtung können die Haltekörper mit dem Heizelement stabil und genau in der Heizkammer positioniert werden. Ferner kann mit der Halteeinrichtung ein elektrischer Kontakt und/oder ein thermischer Kontakt zwischen dem wenigstens einen Heizelement und wenigstens einem der Haltekörper verbessert werden. Der elektrische und/oder thermische Kontakt kann so sichergestellt werden.

Vorteilhafterweise kann die Halteeinrichtung elastisch sein. Durch die Elastizität der Halteeinrichtung kann eine Einbautoleranz und/oder eine betriebsbedingte Toleranz einfach ausgeglichen werden. Vorteilhafterweise kann die Halteeinrichtung wenigstens ein elastisches Bauteil aufweisen. Das wenigstens eine elastische Bauteil kann vorteilhafterweise ein elastisches Druckelement sein oder aufweisen. Das wenigstens eine elastische Bauteil kann wenigstens ein elastisches Federelement, insbesondere eine Blattfeder, aufweisen oder sein.

Das wenigstens eine elastische Bauteil kann sich mit einer Seite an wenigstens einem der Haltekörper abstützen und mit einer insbesondere gegenüberliegenden Seite insbesondere an einer bezüglich der Heizkammer festen Stelle, insbesondere einer Wand, abstützen.

Das wenigstens eine elastische Bauteil kann sich vorteilhafterweise an der dem wenigstens einen Heizelement gegenüberliegenden Außenseite des entsprechenden Haltekörpers abstützen. So kann eine Kraftübertragung des elastischen Bauteils auf den Kontaktbereich verbessert werden. Ein Kontakt zwischen dem wenigstens einen Haltekörper und dem wenigstens einen Heizelement kann so verbessert werden. Vorteilhafterweise kann sich das wenigstens eine elastische Bauteil im Bereich des wenigstens einen Kontaktabschnitts abstützen.

Vorteilhafterweise kann auf der dem wenigstens einen elastischen Bauteil gegenüberliegenden Außenseite des entsprechenden anderen Haltekörpers ein Widerlager angreifen. Das Widerlager kann vorteilhafterweise fest bezüglich der Heizkammer, insbesondere mit einer Wand der Heizkammer, verbunden sein. Vorteilhafterweise kann das Widerlager starr oder elastisch sein.

Vorteilhafterweise kann das wenigstens eine elastische Widerlager im Bereich des entsprechenden wenigstens einen Kontaktabschnitts angreifen.

Vorteilhafterweise kann das wenigstens eine elastische Bauteil und/oder das Widerlager ggf. neben oder zwischen zwei entsprechenden Biegungen oder Stufen des wenigstens einen Haltekörpers, insbesondere ggf. in dem Mittelbereich des ringartigen Teils, angeordnet sein. Auf diese Weise kann das Widerlager und/oder das wenigstens eine elastische Bauteil in einer entsprechenden Vertiefungen platzsparend in der Heizkammer angeordnet sein.

Die technische Aufgabe wird ferner mit der Heizvorrichtung gemäß Anspruch 9 gelöst. Hierbei ist in der wenigstens einen Heizkammer wenigstens ein elektrisch betriebenes Heizelement zwischen zwei Haltekörpern so angeordnet, dass es mit wenigstens einem Kontaktabschnitt wenigstens einem der Haltekörper in einem elektrischen und einem thermischen Kontakt steht, wobei wenigstens ein innerer Volumenbereich zwischen den zwei Haltekörpern und wenigstens ein äußerer Volumenbereich an einer dem wenigstens einen inneren Volumenbereich abgewandten Außenseite wenigstens einem der Haltekörper für das Fluid durchströmbar sind, wobei in wenigstens einem vergrößerten Abschnitt des wenigstens einen inneren Volumenbereichs ein Abstand zwischen den zwei Haltekörpern größer ist als ein Abstand zwischen den Haltekörpern in einem Bereich des wenigstens einen Kontaktabschnitts wenigstens auf dessen dem wenigstens einen vergrößerten Abschnitt zugewandten Umfangsseite.

Die in Verbindung mit dem erfindungsgemäßen Fluidsystem und dessen vorteilhafter Ausführungsformen aufgezeigten Vorteile und Merkmale gelten für die erfindungsgemäße Heizvorrichtung und deren vorteilhafte Ausführungsformen entsprechend und umgekehrt.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
Figur 1 einen Teilschnitt eines Filtersystems für Kraftstoff einer Brennkraftmaschine eines Kraftfahrzeugs, mit einer Heizvorrichtung für den Kraftstoff gemäß einem ersten Ausführungsbeispiel;
Figur 2 einen Detailschnitt des Filtersystems aus Figur 1 im Bereich der Heizvorrichtung;
Figur 3 eine isometrische Darstellung eines unteren Kontaktblechs der Heizvorrichtung aus den Figuren 1 und 2;
Figur 4 einen Detailschnitt einer erfindungsgemäßen Heizvorrichtung gemäß einem zweiten Ausführungsbeispiel, wie sie in dem Filtersystem aus den Figuren 1 und 2 Anwendung finden kann;
Figur 5 einen Querschnitt erfindungsgemäßen Heizvorrichtung gemäß einem dritten Ausführungsbeispiel;
Figur 6 einen Detailschnitt einer nicht-erfindungsgemäßen Heizvorrichtung.

In den Figuren sind gleiche Bauteile mit gleichen Bezugszeichen versehen.

### Ausführungsform(en) der Erfindung

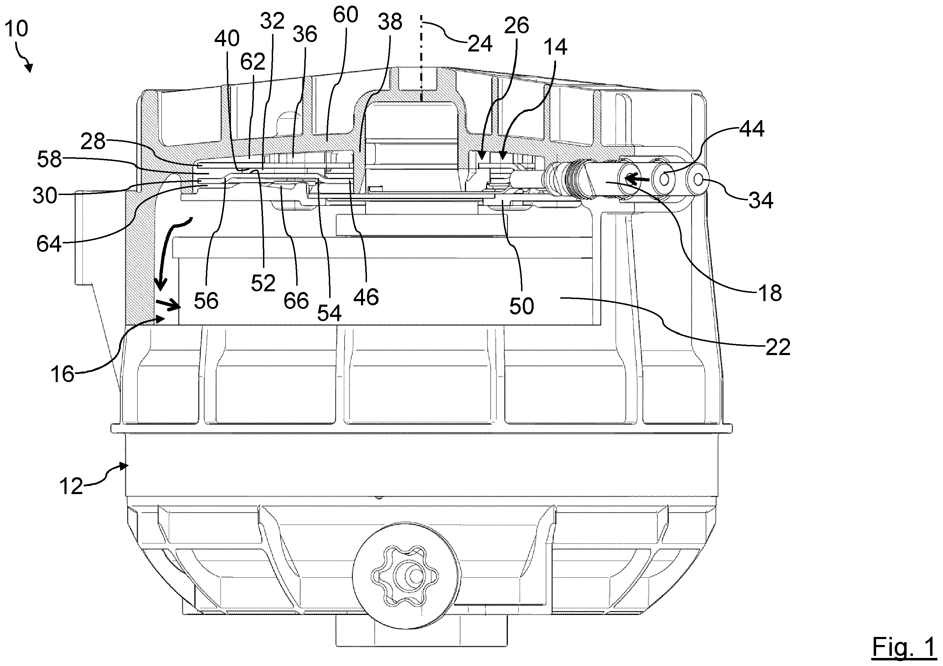

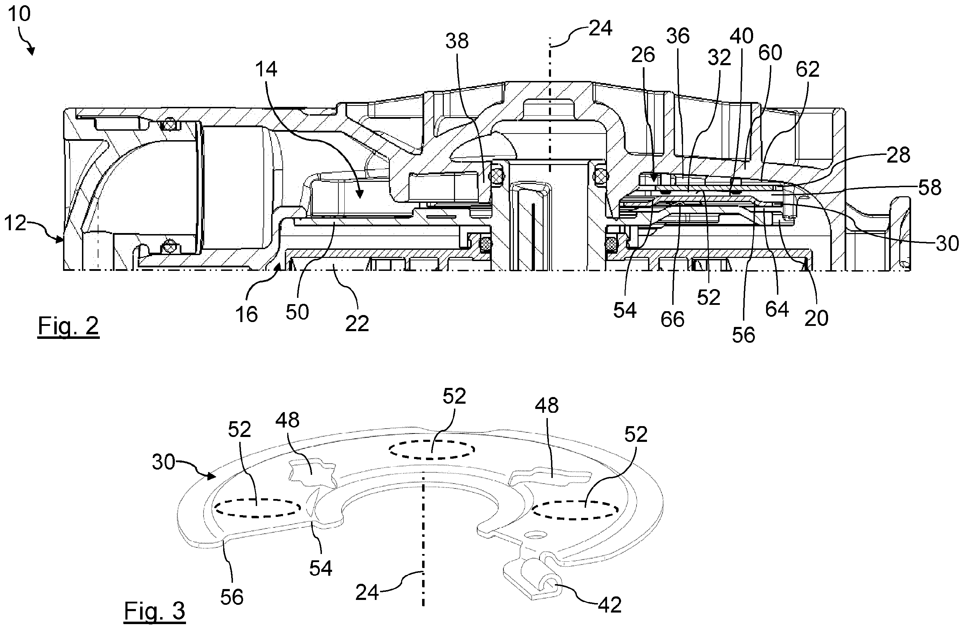

In den Figuren 1 und 2 ist ein Filtersystem 10 für Kraftstoff gezeigt. Das Filtersystem 10 ist in einer Kraftstoffleitung einer Brennkraftmaschine eines Kraftfahrzeugs angeordnet. Es dient zur Reinigung des Kraftstoffs, beispielsweise Dieselkraftstoff.

Das Filtersystem 10 umfasst ein Filtergehäuse 12 mit einer Heizkammer 14, in Figur 1 oben, und einer Filterkammer 16, unten. Ein Einlass 18 für den Kraftstoff führt in die Heizkammer 14. Ein in Figur 2 gezeigter Auslass 20 führt auf einer bzgl. einer Systemachse 24 des Filtersystems 10 radial gegenüberliegenden Seite von der Heizkammer 14 in die Filterkammer 16.

In der Filterkammer 16 ist ein Rundfilterelement 22 angeordnet, welches ein zickzackförmig gefaltetes, umfangsmäßig geschlossenes Filtermedium für den Kraftstoff aufweist.

Das Rundfilterelement 22, die Heizkammer 14 und die Filterkammer 16 sind insgesamt koaxial zu der Systemachse 24 angeordnet. Das Rundfilterelement 22 wird zur Filtrierung des Kraftstoffs von radial außen nach radial innen durchströmt. Ein Elementinnenraum des Rundfilterelements 22 bildet eine Reinseite des Rundfilterelements 22. Er ist mit einem hier nicht weiter interessierenden Systemauslass des Filtersystems 10 verbunden, durch den der gereinigte Kraftstoff das Filtersystem 10 verlassen kann. Der Auslass 20 der Heizkammer 14 verbindet die Heizkammer 14 mit einer das Rundfilterelement 22 radial außen umgebenden Rohseite.

In der Heizkammer 14 ist eine elektrische Heizvorrichtung 26 für den Kraftstoff angeordnet. Mit der Heizvorrichtung 26 kann der Kraftstoff nach dem Eintritt in das Filtergehäuse 12 erwärmt werden, bevor er zur Rohseite des Rundfilterelements 22 gelangt. Auf diese Weise kann die Fließfähigkeit des Kraftstoffs erhöht werden, wodurch eine Druckdifferenz zwischen der Rohseite und der Reinseite des Rundfilterelements 22 verringert werden kann.

Die Heizvorrichtung 26 umfasst ein oberes Kontaktblech 28 und ein unteres Kontaktblech 30. Die Kontaktbleche 28 und 30 sind jeweils aus einem elektrisch und thermisch leitfähigen Metall. Für die Erfindung ist es unerheblich, ob das obere Kontaktblech 28 räumlich oben oder unten ist. Die Bezeichnungen "oberes" und "unteres" sollen lediglich der besseren Verständlichkeit dienen.

Zwischen dem oberen Kontaktblech 28 und dem unteren Kontaktblech 30 ist eine Mehrzahl von elektrisch betriebenen Heizelementen 32 angeordnet. Bei den Heizelementen 32 handelt es sich um sogenannte PTC-Elemente. Die Heizelemente 32 weisen jeweils einen temperaturabhängigen elektrischen Widerstand mit einem positiven Temperaturkoeffizienten auf. Die Heizelemente 32 haben jeweils etwa die Form eines flachen Kreiszylinders.

Das obere Kontaktblech 28 hat etwa die Form eines Sektors einer ebenen Kreisringscheibe, der sich über einen Umfangswinkel von etwa 270 Grad erstreckt. Das obere Kontaktblech 28 ist also über etwa ein Viertel seiner Umfangsseite offen. Das obere Kontaktblech 28 weist eine in den Figuren nicht gezeigte Anschlusslasche für eine elektrische Leitung auf. Die elektrische Leitung ist mit einem ersten elektrischen Anschluss 34 des Filtersystems 10 verbunden.

Das obere Kontaktblech 28 ist fest mit der der Filterkammer 16 gegenüberliegenden oberen Wand 60 der Heizkammer 14 verbunden. Das obere Kontaktblech 28 liegt auf dieser Seite auf Widerlagern 36 auf, die einstückig mit einer oberen Wand 60 verbunden sind. Die Widerlager 36 befinden sich auf der dem unteren Kontaktblech 30 gegenüberliegenden Außenseite des oberen Kontaktblechs 28.

Das obere Kontaktblech 28 weist eine zur Systemachse 24 koaxiale Öffnung auf. Durch die Öffnung erstreckt sich ein Anschlussstutzen 38 in Form eines runden Hohlzylinders, welcher einstückig mit dem Filtergehäuse 12 verbunden ist. Der Anschlussstutzen 38 ist ebenfalls koaxial zur Systemachse 24. In dem Anschlussstutzen 38 verläuft ein hier nicht weiter interessierender Auslasskanal für den gereinigten Kraftstoff, der den Elementinnenraum des Rundfilterelements 22 mit dem Systemauslass des Filtersystems 10 verbindet.

Die bezüglich der Systemachse 24 axial gegenüberliegenden Stirnseiten der Heizelemente 32 sind planparallel. Die dem oberen Kontaktblech 28 zugewandten oberen Stirnseiten der Heizelemente 32 liegen jeweils flächig an innenseitigen, dem unteren Kontaktblech 30 zugewandten Oberflächen von entsprechenden oberen Kontaktabschnitten 40 des oberen Kontaktblechs 28 an. Die den Heizelementen 32 zugewandten Oberflächen der oberen Kontaktabschnitte 40 sind eben. Sie erstrecken sich jeweils senkrecht zur Systemachse 24. Sie sind parallel zu den oberen Stirnseiten der Heizelemente 32. Die Heizelemente 32 befinden sich in den oberen Kontaktabschnitten 40 mit dem oberen Kontaktblech 28 jeweils in einem elektrischen und thermischen Kontakt.

Die Widerlager 36 sind jeweils bezüglich der Systemachse 24 axial gegenüber einem der Heizelemente 32 angeordnet. Die Widerlager 36 greifen auf der Außenseite des oberen Kontaktblechs 28 innerhalb der oberen Kontaktabschnitte 40 an.

Das untere Kontaktblech 30, welches in Figur 3 im Detail gezeigt ist, ist ebenfalls als Sektor einer Kreisringscheibe ausgebildet. Es ist über etwa ein Viertel seines Umfangs offen.

Das untere Kontaktblech 30 weist eine Anschlusslasche 42 auf, die sich neben der offenen Umfangsseite befindet. Die Anschlusslasche 42 erstreckt sich auf der dem oberen Kontaktblech 28 abgewandten Außenseite des unteren Kontaktblechs 30 von dem oberen Kontaktblech 30 weg. Die Anschlusslasche 42 ist über eine entsprechende elektrische Leitung mit einem zweiten elektrischen Anschluss 44 des Filtersystems 10 verbunden.

Die elektrischen Anschlüsse 34 und 44 sind mit einer Spannungsversorgung, beispielsweise mit einem Bordspannungsnetz des Kraftfahrzeugs, verbunden. Sie können beispielsweise mit einer Motorsteuerung der Brennkraftmaschine verbunden sein.

Das untere Kontaktblech 30 weist eine zentrale Mittelöffnung 46 auf, durch die der Anschlussstutzen 38 führt. Ferner weist das untere Kontaktblech 30 zwei exzentrische Positionieröffnungen 48 auf, durch die Positionierdome führen, welche mit dem Filtergehäuse 12 verbunden sind. Die Positionieröffnungen 48 und die Positionierdome geben die bezüglich der Systemachse 24 umfangsmäßige Orientierung des unteren Kontaktblechs 30 in der Heizkammer 14 vor.

Ferner weist das untere Kontaktblech 30 eine Mehrzahl von unteren Kontaktabschnitten 52 auf. Ränder der unteren Kontaktabschnitte 52 sind in Figur 3 als gestrichelte Kreise angedeutet. Auf der dem oberen Kontaktblech 28 zugewandten Innenseite des unteren Kontaktblechs 30 liegen die dem unteren Kontaktblech 30 zugewandten Stirnseiten der Heizelemente 32 an den entsprechenden Oberflächen der unteren Kontaktabschnitte 52 flächig an. Die Heizelemente 32 haben dort mit dem unteren Kontaktblech 30 jeweils einen elektrischen und thermischen Kontakt. Die inneren Oberflächen der unteren Kontaktabschnitte 52 sind eben. Sie verlaufen senkrecht zu der Systemachse 24. Sie sind parallel zu den unteren Stirnseiten der Heizelemente 32. Insgesamt sind die inneren Oberflächen der oberen Kontaktabschnitte 40 und die inneren Oberflächen der unteren Kontaktabschnitte 52 planparallel.

Bezüglich der Systemachse 24, die in Figur 3 der einfacheren Erläuterung wegen angedeutet ist, weist radial innen neben den unteren Kontaktabschnitten 52 das untere Kontaktblech 30 einen radial inneren Biegeabschnitt 54 auf. Radial außen neben den unteren Kontaktabschnitten 52 weist das untere Kontaktblech 30 einen radial äußeren Biegeabschnitt 56 auf. Die Biegeabschnitte 54 und 56 erstrecken sich gemäß der Erfindung 25 koaxial zu der Systemachse 24.

Bezüglich der Systemachse 24 radial innerhalb des radial inneren Biegeabschnitts 54 ist der dortige Abschnitt des unteren Kontaktblechs 30 bezüglich der Systemachse 24 in axialer Richtung betrachtet von dem oberen Kontaktblech 28 weg gebogen. Entsprechend ist ein Abschnitt radial außerhalb des radial äußeren Biegeabschnitts 56 von dem oberen Kontaktblech 28 weg gebogen. Die inneren Oberflächen der Abschnitte radial innerhalb des radial inneren Biegeabschnitts 54 und radial außerhalb des radial äußeren Biegeabschnitt 56 erstrecken sich jeweils planparallel zu einer gedachten radialen Verlängerung der inneren Oberfläche des radial dazwischen liegenden mittleren Abschnitts des unteren Kontaktblechs 30, in dem sich die unteren Kontaktabschnitte 52 befinden.

Die einander zugewandten Innenseiten des oberen Kontaktblechs 28 und des unteren Kontaktblechs 30 außerhalb der Kontaktabschnitte 52 begrenzen einen inneren Volumenbereich 58.

Zwischen der dem unteren Kontaktblech 30 abgewandten Außenseite des oberen Kontaktblechs 28 und der oberen Wand 60 der Heizkammer 14 ist ein oberer äußerer Volumenbereich 62 angeordnet. Zwischen der dem oberen Kontaktblech 28 abgewandten Außenseite des unteren Kontaktblechs 30 und der Bodenwand 50 ist ein unterer äußerer Volumenbereich 64 angeordnet.

Der innere Volumenbereich 58 und die äußeren Volumenbereiche 62 und 64 sind von dem Kraftstoff auf seinem Weg von dem Einlass 18 zu dem Auslass 20 jeweils durchströmbar.

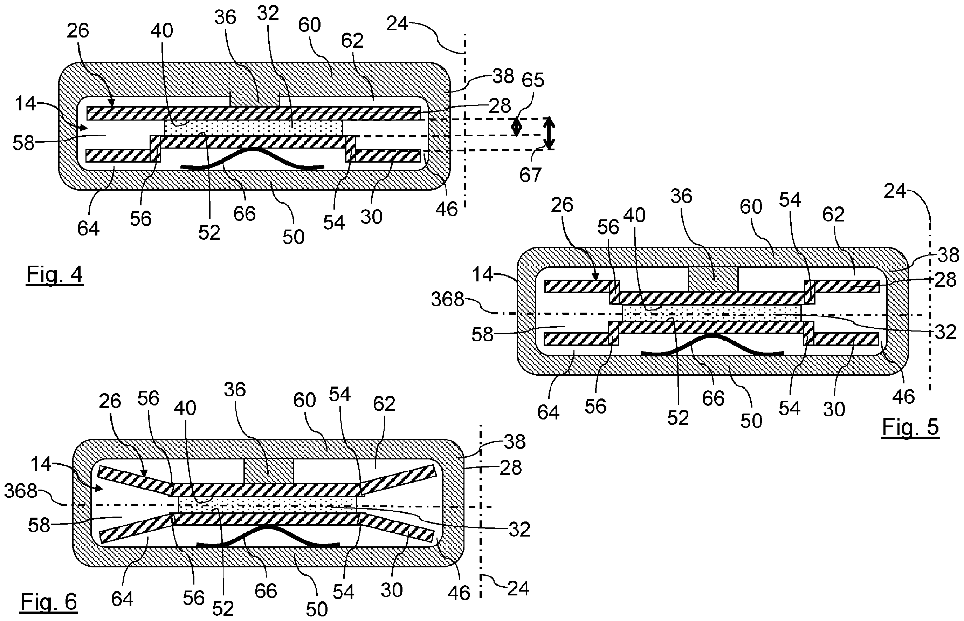

Der innere Volumenbereich 58 und die beiden äußeren Volumenbereiche 62 und 64 haben größenmäßig jeweils einen ähnlichen Strömungsquerschnitt. Auf diese Weise können ähnliche Kraftstoffmengen gleichmäßig durch alle drei Volumenbereiche 58, 62 und 64, auf drei Strömungsebenen, strömen. Dies wird dadurch erreicht, dass aufgrund der Biegungen des unteren Kontaktblechs 30 ein Abstand zwischen dem oberen Kontaktblech 28 und dem unteren Kontaktblech 30 in vergrößerten Abschnitten des inneren Volumenbereichs 58 neben den bezüglich der Systemachse 24 radial inneren Umfangsseiten und den radial äußeren Umfangsseiten der Kontaktabschnitte 40 und 52 größer ist als in den Bereichen zwischen den oberen Kontaktabschnitten 40 und den unteren Kontaktabschnitten 52. Der Abstand zwischen den Kontaktblechen 28 und 30 im Bereich zwischen den Kontaktabschnitten 40 und 52 ist bei einem weiter unten erläuterten zweiten Ausführungsbeispiel, dargestellt in Figur 4, mit dem Bezugszeichen 65 versehen. Der Abstand zwischen den Kontaktblechen 28 und 30 im inneren Volumenbereich 58 ist dort mit dem Bezugszeichen 67 versehen.

An der Außenseite des unteren Kontaktblechs 30 greift bezüglich der Systemachse 24 im Bereich der unteren Kontaktabschnitte 52 jeweils eine Druckfeder 66 an. Die Druckfedern 66 sind als Blattfedern realisiert. Die Druckfedern 66 stützen sich mit ihren dem unteren Kontaktblech 30 abgewandten Seiten gegen die Bodenwand 50 ab. Mit den Druckfedern 66 werden das untere Kontaktblech 30, das entsprechende Heizelement 32 und das obere Kontaktblech 28 gegen die Widerlager 36 aneinander gedrückt. Auf diese Weise werden die thermischen und elektrischen Kontakte zwischen den Heizelementen 32 und den Kontaktabschnitten 42 und 52 sichergestellt und verbessert.

Bei dem Betrieb des Filtersystems 10 wird der Kraftstoff durch den Einlass 18 in die Heizkammer 14 geleitet. Der Kraftstoff durchströmt die Volumenbereiche 58, 62 und 64 und gelangt dabei in Wärmekontakt mit den Kontaktblechen 28 und 30 und den Heizelementen 32. Abhängig von der Kraftstofftemperatur ändert sich der elektrische Widerstand der Heizelemente 32 und damit ihre individuelle Heizleistung. Der Kraftstoff wird entsprechend erwärmt. Der erwärmte Kraftstoff gelangt durch den Auslass 20 in die Filterkammer 16. Er durchströmt das Filtermedium von der Rohseite des Rundfilterelements 22, radial außen, zur Reinseite, radial innen. Der gereinigte Kraftstoff verlässt das Filtergehäuse 12 des Filtersystems 10 durch den Systemauslass.

In Figur 4 ist ein Ausschnitt einer Heizvorrichtung 26 gemäß dem zweiten Ausführungsbeispiel gezeigt, welches zu dem ersten Ausführungsbeispiel aus den Figuren 1 bis 3 ähnlich ist.

In Figur 5 ist eine Heizvorrichtung 26 gemäß einem dritten Ausführungsbeispiel gezeigt, welches zu dem ersten Ausführungsbeispiel aus den Figuren 1 bis 3 und dem zweiten Ausführungsbeispiel aus Figur 4 ähnlich ist. Im Unterschied zu den ersten beiden Ausführungsbeispielen weist beim dritten Ausführungsbeispiel das obere Kontaktblech 28 ähnlich zu dem unteren Kontaktblech 30 einen radial inneren Biegeabschnitt 54 und einen radial äußeren Biegeabschnitt 56 auf. Die Anordnung mit den beiden Kontaktblechen 28 und 30 und dem dazwischenliegenden Heizelementen 32 ist bezüglich einer gedachten Mittelebene 368 durch die Heizelemente 82 etwa symmetrisch. Die Mittelebene 368 verläuft senkrecht zu Systemachse 24.

In Figur 6 ist ein Ausschnitt weiteren, nicht erfindungsgemäßen Heizvorrichtung gezeigt. Im Unterschied zu dem dritten Ausführungsbeispiel aus Figur 5 verlaufen die Abschnitte der Kontaktbleche 28 und 30 radial innen neben dem radial inneren Biegeabschnitt 54 und radial außen neben dem radial äußeren Biegeabschnitt 56 nicht parallel, sondern schräg zueinander. Auf diese Weise weitet sich der innere Volumenbereich 58 nach radial innen und nach radial außen von den Kontaktabschnitten 40 und 52 betrachtet jeweils auf.

## Patentansprüche

1. Fluidsystem (10), insbesondere Filtersystem, für Fluid, insbesondere Kraftstoff, Öl, Wasser oder Harnstofflösung, insbesondere einer Brennkraftmaschine, insbesondere eines Kraftfahrzeugs, mit wenigstens einer Heizvorrichtung (26) für Fluid, mit wenigstens einer Heizkammer (14), die wenigstens einen Einlass (18) und wenigstens einen Auslass (20) für das Fluid aufweist, wobei in der wenigstens einen Heizkammer (14) wenigstens ein elektrisch betriebenes Heizelement (32) zwischen zwei Haltekörpern (28, 30) so angeordnet ist, dass es mit wenigstens einem Kontaktabschnitt (40, 52) wenigstens einem der Haltekörper (28, 30) in einem elektrischen und einem thermischen Kontakt steht, wobei wenigstens ein durch die einander zugewandten Innenseiten der Haltekörper (28, 30) außerhalb des wenigstens einen Kontaktabschnitts (40, 52) begrenzter innerer Volumenbereich (58) zwischen den zwei Haltekörpern (28, 30) und wenigstens ein äußerer Volumenbereich (62, 64) zwischen einer dem wenigstens einen inneren Volumenbereich (58) abgewandten Außenseite wenigstens einem der Haltekörper (28, 30) und einer Wandung der Heizkammer (14) für das Fluid durchströmbar sind, **dadurch gekennzeichnet, dass**
der wenigstens eine Haltekörper (28, 30) bezüglich einer Systemachse (24) radial innen und/oder außen neben dem wenigstens einen Kontaktabschnitt (40, 52) wenigstens einen zur Systemachse (24) koaxialen Biegeabschnitt (54, 56) aufweist, sodass wenigstens ein vergrößerter Abschnitt des wenigstens einen inneren Volumenbereichs (58) gebildet ist, in welchem ein Abstand (67) zwischen den zwei Haltekörpern (28, 30) größer ist als ein Abstand (65) zwischen den Haltekörpern (28, 30) in einem Bereich des wenigstens einen Kontaktabschnitts (40, 52) wenigstens auf dessen dem wenigstens einen vergrößerten Abschnitt zugewandten Umfangsseite.

2. Fluidsystem nach Anspruch 1, **dadurch gekennzeichnet, dass** das wenigstens eine Heizelement (32) mit beiden Haltekörpern (28, 30) zumindest in einem elektrischen Kontakt steht.

3. Fluidsystem nach Anspruch 1 oder 2, **dadurch gekennzeichnet, dass** an den dem wenigstens einen inneren Volumenbereich (58) abgewandten Außenseiten von beiden Haltekörpern (28, 30) wenigstens ein entsprechender äußerer Volumenbereich (62, 64) angeordnet ist.

4. Fluidsystem nach einem der vorigen Ansprüche, **dadurch gekennzeichnet, dass** wenigstens einer der Haltekörper (28, 30) Metall, insbesondere Blech, ist oder aufweist.

5. Fluidsystem nach einem der vorigen Ansprüche, **dadurch gekennzeichnet, dass** wenigstens einer der Haltekörper (28, 30) wenigstens einen ringartigen Teil, insbesondere wenigstens einen Sektor einer Kreisringscheibe, aufweist.

6. Fluidsystem nach einem der vorigen Ansprüche, **dadurch gekennzeichnet, dass** wenigstens einer der Haltekörper (28, 30) wenigstens im Bereich eines Übergangs zwischen dem wenigstens einen Kontaktabschnitt (40, 52) und dem wenigstens einen inneren Volumenbereich (58) wenigstens eine Biegung (54, 56) oder Stufe aufweist.

7. Fluidsystem nach einem der vorigen Ansprüche, **dadurch gekennzeichnet, dass** das wenigstens eine Heizelement (32) einen temperaturabhängigen elektrischen Widerstand, insbesondere mit einem positiven Temperaturkoeffizienten, aufweist.

8. Fluidsystem nach einem der vorigen Ansprüche, **dadurch gekennzeichnet, dass** die wenigstens zwei Haltekörper (28, 30) mit dem dazwischen liegenden wenigstens einen Heizelement (32) mit einer insbesondere elastischen Halteeinrichtung (36, 66) gehalten sind.

9. Heizvorrichtung (26) für ein Fluidsystem, mit den Merkmalen nach einem der vorigen Ansprüche.

## Claims

1. Fluid system (10), in particular filter system, for fluid, in particular fuel, oil, water or urea solution, in particular of an internal combustion engine, in particular of a motor vehicle, with at least one heating device (26) for fluid, with at least one heating chamber (14) which features at least one inlet (18) and at least one outlet (20) for the fluid, wherein in the at least one heating chamber (14) at least one electrically operated heating element (32) is disposed between two retaining bodies (28, 30) in such a way that it has an electrical and thermal contact with at least one contact section (40, 62) with at least one of the retaining bodies (28, 30), wherein at least one inner volume (58) delimited by the interior sides facing each other of the retaining bodies (28, 30) outside of the at least one contact section (40, 52) between the two retaining bodies (28, 40) and at least one outer volume (62, 64) between one exterior side facing away from the at least one inner volume (58) of at least one of the retaining bodies (28, 30) and a wall of the heating chamber (14) allow passage for the fluid, **characterized in that** the at least one retaining body (28, 30) features relative to a system axis (24) radially inwards and/or outwards beside the at least one contact section (40, 52) at least one bending section (54, 56) coaxial relative to the system axis (24) so that at least one larger section of the at least one inner volume (58) is formed in which a distance (67) between the two retaining bodies (28, 30) is larger than a distance (65) between the retaining bodies (28, 30) in an area of the at least one contact section (40, 52) at least on its circumferential side facing the at least one larger distance.

2. Fluid system according to claim 1, **characterized in that** the at least one heating element (32) is at least in electrical contact with both retaining bodies (28, 30).

3. Fluid system according to claim 1 or 2, **characterized in that** at least one corresponding outer volume area (62, 64) is disposed on the exterior sides of both retaining bodies (28, 30) facing away from the at least one inner volume area (58).

4. Fluid system according to one of the above claims, **characterized in that** at least one of the retaining bodies (28, 30) is made of or comprises metal, in particular sheet metal.

5. Fluid system according to one of the above claims, **characterized in that** at least one of the retaining bodies (28, 30) features at least one ring-type section, in particular at least one section of a circular ring disk.

6. Fluid system according to one of the above claims, **characterized in that** at least one of the retaining bodies (28, 30) features at least in the area of a transition between the at least one contact section (40, 52) and the at least one inner volume area (58) at least one bend (54, 56) or step.

7. Fluid system according to one of the above claims, **characterized in that** the at least one heating element (32) features a temperature-dependent electrical resistance with a positive temperature coefficient.

8. Fluid system according to one of the above claims, **characterized in that** at least two retaining bodies (28, 30) with the at least one heating element (32) lying therebetween are supported by means of an in particular resilient holding appliance (36, 66).

9. Heating device (26) for a fluid system, having the features according to one of the above claims.

## Revendications

1. Système fluidique (10), notamment système de filtre, pour fluide, notamment carburant, huile, eau ou solution d'urée, notamment d'un moteur à combustion interne, notamment d'un véhicule automobile, avec au moins un dispositif de chauffage (26) pour du fluide, avec au moins une chambre de chauffe (14) qui comporte au moins une entrée (18) et au moins une sortie (20) pour le fluide, au moins un élément chauffant (32) actionné à l'électricité étant disposé dans la chambre de chauffe (14), au moins au nombre d'une, entre deux corps de retenue (28, 30) de sorte que cet élément ait un contact électrique et thermique avec au moins une section de contact (40, 62) avec au moins un des corps de retenue (28, 30), le fluide pouvant passer à travers un volume intérieur (58), au moins au nombre d'un, limité par une des faces intérieures orientées les unes vers les autres des corps de retenue (28, 30) en dehors de la section de contact (40, 52), au moins au nombre d'une, entre les deux corps de retenue (28, 30), et à travers un volume extérieur (62, 64), au moins au nombre d'un, entre une face extérieure orientée à l'opposé du volume intérieur (58), au moins du nombre d'un, d'au moins un des corps de retenue (28, 30) et d'une paroi de la chambre de chauffe (14), **caractérisé en ce que** le corps de retenue (28, 30), au moins au nombre d'un, comporte, en sens radial, à l'intérieur et/ou extérieur, par rapport à un axe de système (24), en plus de la section de contact (40, 52), au moins au nombre d'une, au moins une section flexible (54, 56) coaxiale par rapport à l'axe de système (24), de sorte à former au moins une section agrandie du volume intérieur (58), au moins au nombre d'un, dans laquelle une distance (67) entre es deux corps de retenue (28, 30) est supérieure à une distance (65) entre les corps de retenue (28, 30) dans une partie de la section de contact (40, 52), au moins au nombre d'une, au moins de son côté circonférentiel orienté vers la section agrandie, au moins au nombre d'une.

2. Système fluidique selon la revendication 1, **caractérisé en ce que** l'élément de chauffage (32), au moins au nombre d'un, a au moins un contact électrique avec les deux corps de retenue (28, 30).

3. Système fluidique selon la revendication 1 ou 2, **caractérisé en ce qu'**au moins un volume extérieur (62, 64) correspondant est disposé sur les faces extérieures orientées à l'opposé du volume intérieur (58), au moins au nombre d'un, des deux corps de retenue (28, 30).

4. Système fluidique selon l'une des revendications précédentes, **caractérisé en ce qu'**au moins un des corps de retenue (28, 30) est en métal, notamment en tôle, ou comporte du métal, notamment de la tôle.

5. Système fluidique selon l'une des revendications précédentes, **caractérisé en ce qu'**au moins un des corps de retenue (28, 30) comporte au moins une partie de type annulaire, notamment un secteur d'un disque d'un anneau de cercle.

6. Système fluidique selon l'une des revendications précédentes, **caractérisé en ce qu'**au moins un des corps de retenue (28, 30) comporte au moins une courbure (54, 56) ou un étage au moins dans la zone d'une transition entre une section de contact (40, 52), au moins au nombre d'une, et le volume intérieur (58), au moins au nombre d'un.

7. Système fluidique selon l'une des revendications précédentes, **caractérisé en ce que** l'élément de chauffage (32), au moins au nombre d'un, comporte une résistance électrique en fonction de la température, notamment avec un coefficient de température positif.

8. Système fluidique selon l'une des revendications précédentes, **caractérisé en ce que** les deux corps de retenue (28, 30), au moins au nombre de deux, sont maintenus avec l'élément de chauffage (32) intermédiaire, au moins au nombre d'un, au moyen d'un dispositif de retenue (36, 66) notamment élastique.

9. Dispositif de chauffage (26) pour un système fluidique avec les caractéristiques selon l'une des revendications précédentes.
